Europäisches Patentamt

European Patent Office

Office européen des brevets

(11) Numéro de publication: **0 407 304 A1**

## (12) DEMANDE DE BREVET EUROPEEN

(21) Numéro de dépôt: 90401952.8

(22) Date de dépôt: 05.07.90

(51) Int. Cl.5: **B25J 9/04**, B25J 9/08

(30) Priorité: 07.07.89 FR 8909164

(43) Date de publication de la demande:
09.01.91 Bulletin 91/02

(84) Etats contractants désignés:
DE ES GB IT SE

(71) Demandeur: **RENAULT AUTOMATION**
**8/10 avenue Emile Zola**
**F-92109 Boulogne-Billancourt(FR)**

(72) Inventeur: **Malatier, François**
**16, rue du Haut d'Aulnay**
**F-95130 Francouville(FR)**

(74) Mandataire: **Ernst-Schonberg, Michel**
**REGIE NATIONALE DES USINES RENAULT (S.**
**0267) 8 & 10, avenue Emile Zolaola**
**F-92109 Boulogne Billancourt Cédex(FR)**

(54) **Structure de bras manipulateur.**

(57) Structure de robot ou de manipulateur polyarticulé à bras montés en cascade et à débattement non symétrique dont le premier axe vertical (2) du socle (3) et le deuxième axe horizontal (4) sont décalés et que l'ensemble des bras (5) et (6) peut être disposé selon deux directions opposées.

FIGURE 2

## STRUCTURE DE BRAS MANIPULATEUR

La présente invention concerne une structure de robot polyarticulé à bras montés en cascade et à débattement non symétrique.

La particularité de ce type de structure androïde est d'offrir un robot ou un manipulateur de faible encombrement au sol, permettant d'accéder aisément dans des espaces encombrés avec des vitesses de déplacement élevées.

Lorsque le robot ou manipulateur est fixé sur le sol, la zone de travail est généralement celle qui est située en avant du socle de base et qui est recouverte par le débattement des bras.

Lorsque le robot ou manipulateur est suspendu, la zone arrière est généralement utilisée et la zone de travail est ainsi recouverte par le débattement des bras.

Les robots ou manipulateurs de type utilisés actuellement ont leur premier axe de rotation vertical sur le socle de base concourant avec le premier axe de rotation horizontal du premier bras. Cet agencement procure à l'extrémité de robot ou manipulateur un débattement sphérique dont le centre est le point d'intersection de l'axe de rotation vertical sur le socle de base avec le premier axe de rotation horizontal du premier bras.

On comprend qu'une telle réalisation fige les capacités en extension du robot ou du manipulateur. Si on veut augmenter le débattement de la pointe outil par rapport au socle de base, il faut modifier la longueur de bras ce qui implique une modification de la motorisation si on souhaite garder les mêmes performances.

La structure décrite propose une augmentation du débattement de la pointe outil dans la zone avant du robot sans modifier la longueur et la motorisation des bras.

De même, lorsque le robot ou le manipulateur est suspendu, la structure suivant l'invention permet d'augmenter la zone de débattement arrière de la pointe outil, sans modifier la longueur et la motorisation des bras.

Selon une forme de réalisation préférentielle, le premier élément mobile qui pivote selon un axe vertical sur le socle de base et qui possède un axe de rotation horizontal du premier bras est agencé de façon à ce que ces deux axes ne soient pas concourants, mais décalés d'une valeur correspondant à l'augmentation du débattement souhaité. Le montage du premier bras sur son axe d'entraînement peut se faire selon deux positions symétriques par rapport à l'axe longitudinal de ce bras.

Les dessins annexés illustrent l'invention :
- La figure 1 représente une structure de robot polyarticulé de conception habituelle :
- La figure 2 représente une structure de robot polyarticulé à axes décalés et posé sur le sol ;
- La figure 3 représente une structure de robot polyarticulé à axes décalesés et suspendu ;
- La figure 4 représente une vue en élévation du premier élément mobile à axes décalés ;
- La figure 5 représente une vue de côté de la figure 4.

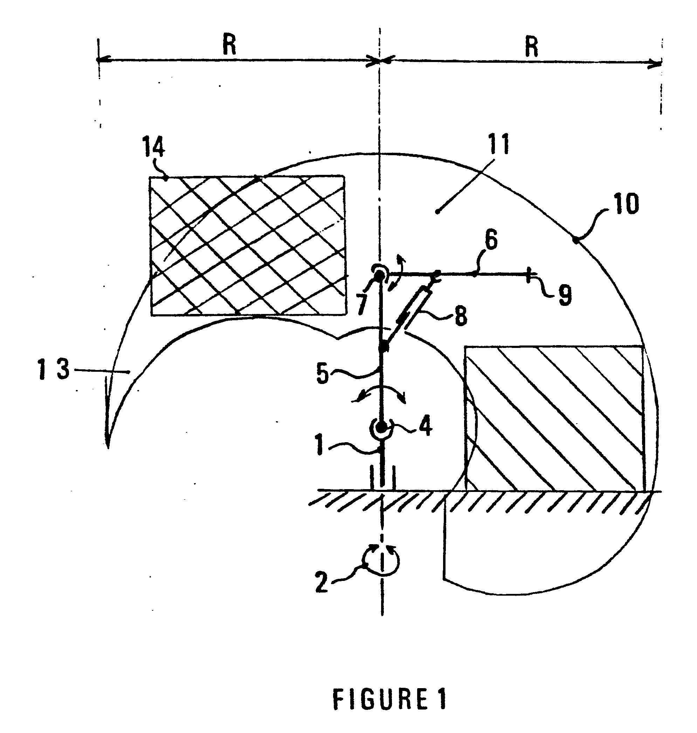

La structure représentée sur la figure 1 est celle d'un robot ou d'un manipulateur de conception actuelle.

Un premier élément mobile 1 qui pivote suivant un axe vertical 2 sur un socle de base 3 porte a son extrémité supérieure l'axe de rotation horizontal 4 du premier bras 5. Un deuxième bras 6 est articulé 7 à l'extrémité du premier bras 5. Sur ce type de structure, l'actionneur 8 du deuxième bras 6 sur le premier bras 5 est de type linéaire, ce qui autorise un débattement limité et non symétrique. La ligne 10 est la limite extérieure de l'aire de débattement 11 de la pointe outil 9 lorsque la structure pivote autour de l'axe 4, les bras 5 et 6 étant en configuration d'extension maximum. Cette ligne 10 est, dans sa partie supérieure, un cercle dont le point de centre est l'axe 4 de pivotement du bras 5 sur l'élément mobile 1. En combinant le mouvement de l'axe 4 avec l'axe 2, on obtient un volume de débattement sphérique (dans sa partie supérieure) et dont le centre est placé sensiblement au milieu du socle 3 du robot ou manipulateur.

Lorsque le socle 3 du robot ou manipulateur est posé sur le sol, la zone avant de travail 12 est le plus souvent située près du sol et en avent du robot ou manipulateur, c'est-à-dire dans la zone de débattement maximum des bras 5 et 6 et sous l'arc formé par lesdits bras. La zone arrière 13 est surtout utilisée comme aire de repli des bras pendant les opérations de dégagement de la zone de travail 12, car bien que l'envergure arrière R, soit de même valeur que l'envergure avant R, cette zone privilégie une aire arrière de travail 14 placée en hauteur utilisable pour de rares applications.

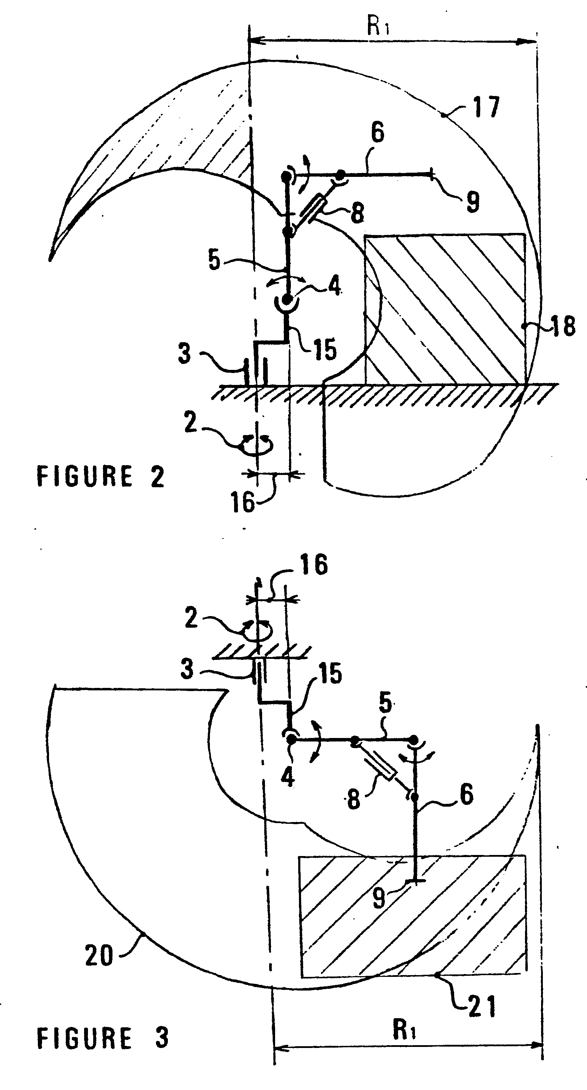

Une structure de robot ou de manipulateur convertible faisant l'objet de l'invention est représenté sur la figure 2. Le premier élément mobile 15 qui pivote suivant un axe vertical 2 sur le socle de base 3 porte à son extrémité supérieure l'axe de rotation 4 du premier bras 5. Cet axe 4 n'est pas contenu dans un plan passant par l'axe 2 mais en est décalé d'une valeur 16. La pointe outil 9 décrit une trajectoire 17 qui a la même forme que la trajectoire 10 de la structure classique décrite plus haut mais décalée en avant de l'axe 2 de la valeur 16. Le volume de la zone de travail 18 ainsi que l'envergure du débattement R1 dans la partie avant sont sensiblement augmentés.

Par retournement de l'ensemble des bras 5 et 6 sur l'axe 4, on obtient une structure du type représenté sur la figure 3. Le robot ou le manipulateur est suspendu et la pointe outil 9 décrit une trajectoire 20 qui a la même forme que le trajectoire 10 de la structure classique décrite sur la figure 1 mais qui est décalée en arrière de l'axe 2 de la valeur 16. De même, la zone de travail 21 ainsi que l'envergure R1 du débattement dans la partie arrière sont sensiblement augmentés.

La particularité réside dans le fait qu'avec deux types de premier élément mobile, on peut obtenir trois types de structure :
- Une structure équipée d'un premier élément mobile 1 qui est du type classique avec une envergure de débattement avant R égale à l'enveloppe de débattement arrière R (figure 1).
- Une structure posée sur le sol équipée d'un premier élément mobile 15 dont le décalage 16 est orienté vers l'avant avec une envergure de débattement R1 supérieure d'une valeur 16 à l'envergure de débattement de la partie arrière (voir figure 2).
- Une structure suspendue équipée d'un premier élément mobile 15 dont le décalage 16 est orienté vers l'arrière avec une envergure de débattement R1 supérieure d'une valeur 16 à l'envergure de débattement de la partie avant (voir figure 3).

Ainsi, les performances ou robot ou manipulateur (accélération, vitesse, précision, charge) ne sont pas modifiées malgré l'augmentation du débattement - 17 ou 20.

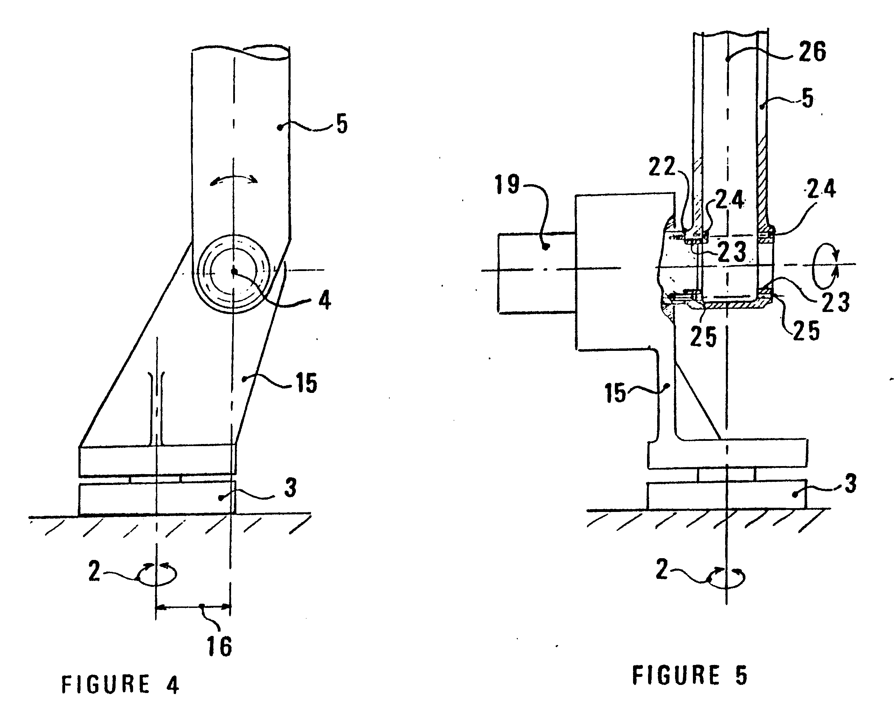

Les figures 4 et 5 représentent un mode de réalisation du premier élément mobile 15 avec un déclage 16.

L'axe 4 entraîné par un moto-réducteur 19 à son extremité libre aménagé avec une face d'appui 21 et un cylindre de centrage 23. Le premier bras 5 possède deux faces opposées coaxiales et parallèles d'appui et de centrage ainsi que des moyens de laison 23 et de localisation 24 avec l'axe 4 lui permettant un montage symétrique par rapport à son axe longitudinal 26 sur l'axe d'entraînement 4.

Le montage en porte à faux est décrit à titre d'exemple. On peut tout aussi facilement prévoir un premier élément mobile 15 en forme de chape avec un bras 5 immobilisé sur l'axe 4 par un chapeau.

L'axe 4 peut être cylindrique avec une clavette d'entraînement ou avoir une forme prismatique comme un carré.

**Revendications**

1°) Structure de robot ou de manipulateur polyarticulé avec les trois premiers axes montés en cascade et à débattement non symétrique comprenant :

- un premier élément mobile (1), (15) avec un premier axe moteur (2) de pivotement axial monté perpendiculairement sur le socle de base (3) qui sert de support à l'ensemble du robot ou manipulateur,
- sur le premier élément mobile (1), (15), un deuxième axe moteur (4) de commande d'un premier bras (5) perpendiculaire au premier axe moteur (2), mais contenu dans un plan parallèle et décalé d'une valeur (16) par rapport à l'axe de pivotement vertical (2),
- un deuxième bras (6) monté pivotant dans le même plan à l'autre extrémité du premier bras (5) par un actionneur linéaire procurant un débattement inférieur à 180°,
caractérisé en ce que le premier bras (5) possède des moyens d'appui (22) de centrage (23) de fixation (24) et de localisation (25) sur l'axe moteur (4) permettant le montage dudit bras (5) selon deux positions symétriques par rapport à l'axe longitudinal (26) audit bras (5).

FIGURE 1

FIGURE 2

FIGURE 3

5

FIGURE 4

FIGURE 5

EP 0 407 304 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | EP-A-0078251 (IGM) <br> * abrégé * <br> --- | 1 | B25J9/04 <br> B25J9/08 |
| Y | DE-U-8511473 (KOVARIK) <br> * page 5, lignes 26 - 33; figure 6 * <br> --- | 1 | |
| A | US-A-4518308 (GRZYBOWSKI) <br> * colonne 4, ligne 32 - colonne 5, ligne 20; figures 4-6 * <br> --- | 1 | |
| A | FR-A-2510023 (PHAREMME) <br> --- | | |
| A | FR-A-2536690 (JUNGHEINRICH) <br> ----- | | |

DOMAINES TECHNIQUES
RECHERCHES (Int. Cl.5 )

B25J

Le présent rapport a été établi pour toutes les revendications

| Lieu de la recherche | Date d'achèvement de la recherche | Examinateur |
|---|---|---|
| LA HAYE | 02 OCTOBRE 1990 | LAMMINEUR P.C.G. |